# EUROPÄISCHE PATENTSCHRIFT

(11) **EP 1 560 972 B1**
(45) Veröffentlichungstag und Bekanntmachung des Hinweises auf die Patenterteilung: **08.04.2009**
(21) Anmeldenummer: 03779915.2
(22) Anmeldetag: 13.11.2003
(51) Int. Cl.: D06M 15/643, C08L 83/08, C08G 77/388

(54) **TEILQUATERNIERTE, AMINOFUNKTIONELLE ORGANOPOLYSILOXANE UND DEREN VERWENDUNG IN W SSRIGEN SYSTEMEN**
PARTIALLY QUATERNISED, AMINO-FUNCTIONAL ORGANOPOLYSILOXANES AND THEIR USE IN AQUEOUS SYSTEMS
ORGANOPOLYSILOXANES A FONCTION AMINE PARTIELLEMENT QUATERNISES ET LEUR UTILISATION DANS DES SYSTEMES AQUEUX

(30) Priorität: 14.11.2002 DE 10253152
(43) Veröffentlichungstag der Anmeldung: 10.08.2005
(73) Patentinhaber: Rudolf GmbH, 82538 Geretsried (DE)
(72) Erfinder: SANDNER, Bernhard, 82538 Geretsried (DE); STANICA, Cristina, 82515 Wolfratshausen (DE); HAYESSEN, Rainer, 82538 Geretsried (DE); DUSCHEK, Gunther, 83671 Benediktbeuern (DE)
(74) Vertreter: Pfenning, Meinig & Partner GbR
(86) Internationale Anmeldenummer: PCT/EP2003/012703
(87) Internationale Veröffentlichungsnummer: WO 2004/044306

(56) Entgegenhaltungen:
- DE-A- 10 004 321
- US-A- 5 707 435
- US-B1- 6 201 093

## Beschreibung

Die Erfindung betrifft teilquaternierte, aminofunktionelle Organopolysiloxane und deren Verwendung in wässrigen Systemen auf textilen Substraten.

Aminogruppen enthaltende Organopolysiloxane werden schon seit längerer Zeit als Texfilaus-rüstungsmittel eingesetzt. Bei den damit behandelten Textilien werden gute Weichgriffeffekte erreicht. Bevorzugt verwendet werden Organopolysiloxane mit der aminofunktionellen Gruppe

-(CH₂)₃NH(CH₂)₂NH₂.

Derartige aminogruppenhaltige Organopolysiloxane liegen für die Verwendung in der Textilausrüstung üblicherweise in Form von wässrigen Mikroemulsionen vor, deren Herstellung beispielhaft in der WO 88/08436 beschrieben wird. Dabei werden durch Erhitzen einer Mischung von mit Säure neutralisiertem, aminogruppenhaltigem Organopolysiloxan, Wasser und Emulgator klare Mikroemulsionen hergestellt. Gemäß dem in EP-A 0138 192 beschriebenen Verfahren erreicht man dieses Ziel durch Scheremulgierung in konzentrierter, wenig Wasser enthaltender Form, indem man von den Grundstoffen aminogruppenhaltiges Organopolysiloxan in neutralisierter Form, Emulgator und Wasser ausgeht.

Vorteilhafte Weichgriffeffekte werden mit Organopolysiloxanen erzielt, deren Aminofunktionen in Form der erwähnten Aminoethylaminopropylgruppen vorliegen. Dabei wird aufgrund der morphologischen Molekülstruktur dieser Seitenkette eine besondere Affinität zu den Faser molekülen des textilen Substrates durch deren partielle Umschlingung postuliert. Hieraus resultiert eine spezifische Orientierung des Polymermoleküls, welche den guten Weichgriff verursacht. Dies wird indirekt durch die Tatsache erhärtet, dass bei Acylierung (Acetylierung) der äußeren, primären Aminofunktionen der weiche Griffcharakter der damit behandelten textilen Substrate erheblich leidet, weil die andersgeartete Molekülstruktur eine ausreichende Umschlingung der Fasermoleküle und die damit verbundene spezifische Orientierung nicht mehr zulässt.

Die beschriebenen aminogruppenhaltigen und die acylierte Aminogruppen enthaltenden Organopolysiloxane liegen in Form ihrer Mikroemulsionen üblicherweise als gut dissozüerbare Ammoniumsalze organischer oder anorganischer Säuren vor. Bei pH-Werten oberhalb 7 werden die Salze in die freien Basen umgewandelt. Dabei wird die Stabilität der Mikroemulsionen aufgrund der schwächeren Dissoziation im alkalischen Bereich reduziert, was bei ungenügend abgesäuertem Textilgut und dadurch verursachten pH-Werten oberhalb 7 zur Koaleszenz der Mikroemulsionspartikel und deren Aufschwimmen als Öltröpfchen auf der Oberfläche der Behandlungsflotte führt. Im weiteren Veredelungsablauf können die Öltröpfchen auf das Textilgut transferiert oder auch auf den Walzen der Behandlungsaggregate niedergeschlagen werden. Dabei entstehen auf den Textilien Silikonflecken, welche sich nicht oder nur sehr schwer wieder auswaschen lassen.

Dieses Verhalten ist in der Textilausrüstung ein erheblicher Nachteil, weil sehr viele Behandlungsschritte während der Ausrüstung von textilen Substraten in stark alkalischem Milieu durchgeführt werden. Durch ungenügend sorgfältig durchgeführte Waschprozesse können Restmengen von Alkalien auf dem Substrat verbleiben und während der nachfolgenden Veredelungsschritte in die Behandlungsbäder eingeschleppt werden. Insbesondere auf Anlagen mit wenig Behandlungsflotte wie z.B. dem Foulard, kann dabei der pH-Wert in kürzester Zeit auf oberhalb 9 ansteigen und zu den erwähnten Emulsionsspaltungen führen.

Ein weiterer Nachteil der genannten aminofunktionellen Polysiloxane liegt in einer Vergilbungstendenz, welche bei den damit behandelten, weißen und hellfarbigen textilen Substraten bei Trocknungstemperaturen über 120°C auftreten kann.

Die Verwendung der genannten aminofunktionellen Polysiloxane erfolgt gemäß des Standes der Technik auf allen textilen Substraten. So werden Gewebe und Gewirke aus nativen Fasern, wie beispielsweise Baumwolle oder Wolle, als auch aus synthetischen Fasern, wie beispielsweise Viskose, Polyester, Polyamid oder Polyacrylnitril erfolgreich in großem Umfang mit derartigen Produkten behandelt.

In einigen Fällen spielt bei den erzielbaren Ausrüstungseffekten die Tatsache eine eher untergeordnete Rolle, dass aminofunktionelle Polysiloxane den Textilien zwar einen guten Weichgriff, gleichzeitig aber auch einen mehr oder weniger stark ausgeprägten, hydrophoben Charakter verleihen. Es gibt jedoch textile Anwendungen, wo Hydrophobie unerwünscht ist. So wird beispielsweise von Bade- und Handtüchern neben einem guten, flauschigen Weichgriff eine hervorragende Saugfähigkeit erwartet, um einen optimalen Abtrocknungseffekt zu erreichen. Bei Unterwäsche ist häufig ebenfalls gute Saugfähigkeit erwünscht. Auch bei vielen Bekleidungsartikeln im Sport- und Outdoorbereich, wie beispielsweise bei Fahrrad- oder Fußballertrikots, ist neben gutem Weichgriff die Saugfähigkeit des textilen Grundmaterials Voraussetzung. Die Anwendung von aminofunktionellen Polysiloxanen ist daher in den genannten Fällen limitiert oder völlig ausgeschlossen.

Es ist ferner auch bekannt, dass Mikroemulsionen von quaternäre Ammoniumgruppen tragenden Organopolysiloxanen die beschriebenen Nachteile hinsichtlich der thermischen Vergilbung und hinsichtlich der Stabilitäten in alkalischen wässrigen Verdünnungen nicht aufweisen. Wie nachfolgend beschrieben, kann je nach angewendetem Herstellungsverfahren und der Zusammensetzung teilweise auch gute Hydrophilie und damit verbunden eine gute Saugfähigkeit erreicht werden. Quaternäre Ammoniumgruppen tragende-Organopolysiloxane stellen damit bezüglich dieser genannten Eigenschaften eine Verbesserung gegenüber den aminogruppenhaltigen Organopolysiloxanen dar. Den genannten Vorteilen der quaternäre Ammoniumgruppen tragenden Polysiloxane steht jedoch der Nachteil gegenüber, dass sie, verglichen mit den ausschließlich mit lateralen Aminogruppen modifizierten Polysiloxanen, einen schwächeren Weichgriff auf den damit ausgerüsteten Textilien erzeugen.

Aus der Literatur sind quaternäre Ammoniumgruppen tragende Organopolysiloxane bekannt. Für die Herstellung werden dabei unterschiedliche Wege beschrieben, wobei abhängig von den jeweils verwendeten Edukten und den Herstellungsverfahren Polysiloxane erhalten werden, deren quaternäre Ammoniumgruppen an unterschiedlichen Positionen auf dem Polymerrücken der Polysiloxankette gebunden sein können. Hierbei sind seitenständige (laterale), endständige (terminale) und polymerrückeninterne Positionierungen der funktionellen Gruppen sowie Mischformen hiervon möglich.

So wird in der DE-AS 14 93 384 ein Verfahren zur Herstellung von Organosiloxanverbindungen oder Verbindungsgemischen beschrieben, bei welchem man von den entsprechenden Methylwasserstoffpolysiloxanen ausgeht. Bei diesen handelt es sich im allgemeinen um equilibrierte Siloxangemische, bei denen die Anzahl der Methylwasserstoffsiloxi- und Dimethylsiloxieinheiten einer statistischen Verteilung entsprechen. Die Organosiloxane mit quaternären Ammoniumgruppen werden dabei auf an sich bekannte Weise durch Umsetzung eines Epoxisiloxanes mit Dimethylamin hergestellt und das erhaltene Dimethylaminoorganosiloxan mit einem Halogenwasserstoff oder mit einem Methylhalogenid in die quaternäre Ammoniumverbindung übergeführt. Bei den solcherart hergestellten Verbindungen werden modifizierte Organopolysiloxane erhalten, bei welchen die quaternären Ammoniumgruppen lateral an der Polysiloxankette positioniert sind. Die genannten Verbindungen werden für die wasserabweisende Behandlung von z.B. Glas- oder Aluminiumoberflächen empfohlen.

Eine weitere Möglichkeit zur Herstellung von Organopolysiloxanen mit lateralen, quaternären Ammoniumgruppen ist in DE 19 652 524 A1 beschrieben. Dabei werden beispielsweise aminoethylaminopropylgruppenhaltige Organopolysiloxane in Gegenwart von Wasser und geeigneten Emulgatoren mit p-Toluolsulfonsäuremethylester als Alkylierungsmittel zu den entsprechenden quaternären Organopolysiloxanen umgesetzt, wobei sich gleichzeitig eine Mikroemulsion ausbildet. Nachteilig ist an diesen Zubereitungen der gegenüber den ausschließlich mit lateralen Aminogruppen modifizierten Polysiloxanen schwächer ausgeprägte Weichgriff der damit ausgerüsteten Textilien.

Herstellung und Anwendung von diquaternären Polysiloxanen werden in der US 4 891 166 beschrieben. Die Synthese erfolgt dabei durch Umsetzung von terminale Epoxigruppen enthaltenden Polysiloxanen mit tertiären Aminen in solchen Mengenverhältnissen, dass jeder Epoxigruppe mindestens eine tertiäre Aminogruppe entspricht und die Umsetzung in Gegenwart eines Säureequivalents, bezogen auf die zu quatemierenden Stickstoffatome bei erhöhter Temperatur stattfindet. Die resultierenden diquatemären Polysiloxane besitzen aufgrund dieser besonderen Herstellungsweise ausschließlich terminal positionierte quaternäre Ammoniumgruppen. Die so hergestellten Verbindungen werden für die Anwendung in Haarbehandlungsmitteln und Kosmetika empfohlen. Nachteilig ist bei diesen Zubereitungen, wie die Anmelderin festgestellt hat, der gegenüber den ausschließlich mit lateralen Aminogruppen modifizierten Polysiloxanen schwächer ausgeprägte Weichgriff, wenn man damit Textilien behandelt.

Eine weitere Möglichkeit zur Herstellung quaternär modifizierter Organopolysiloxane ist in DE 37 05 121-A1 beschrieben. Die quaternären Ammoniumgruppen sind dabei aufgrund des Herstellungsverfahrens ausschließlich innerhalb der Polymerhauptkette positioniert. Die Herstellung erfolgt beispielsweise durch platin katalysierte Addition von Allylglycidether an α,ω- ^{.} Wasserstoffdimethylpolysiloxan und anschließende Umsetzung des so erhaltenen α,ω-Diepoxipolysiloxanes mit einem ditertiärem Alkyldiamin unter sauren Bedingungen. Als Anwendung ist Haarpflege vorgesehen. Nachteilig ist bei diesen Zubereitungen wiederum, wie die Anmelderin festgestellt hat, der gegenüber den ausschließlich mit lateralen Aminogruppen modifizierten Polysiloxanen schwächer ausgeprägte Weichgriff, wenn man damit Textilien behandelt.

In WO 02/10259-A1 werden quaternär modifizierte Organopolysiloxane beschrieben, bei welchen die quaternären Ammoniumgruppen ebenfalls innerhalb der Polymerhauptkette positioniert sind und terminale, tertiäre Aminofunktionen aufweisen. Sie werden für die textile Erstausrüstung sowie für kosmetische Formulierungen empfohlen.

Weitere polyquaternäre Polysiloxanpolymere mit innerhalb der Polymerhauptkette angeordneten quaternären Gruppen werden in US 4 533 714 beschrieben. Diese finden Anwendung in kosmetischen Formulierungen zur Haarbehandlung.

US 3 207 707 beschreibt die Herstellung von Polymeren mit Stickstoff in der Hauptkette, wobei der Stickstoff in Form von tertiären Aminogruppen vorliegt, jedoch keine quaternären Ammoniumgruppen entstehen. Die so hergestellten Produkte sind unter anderem für die Anwendung als Verpackungs- und Isoliermaterial beschrieben.

In US 3 033 815 wird die Herstellung von Organopolysiloxanen mit lateral angeordneten, aminofunktionellen Gruppen beschrieben, welche für die Verwendung als Schlichte für die Behandlung von Fasern, insbesondere Glasfasern empfohlen werden.

WO 02/10501-A1 beschreibt Organopolysiloxane für die Verwendung als Weichgriffmittel mit reduzierter Schaumtendenz, welche lateral angeordnete, alkylierte aminofunktionelle Gruppen tragen.

Gemäß US 5 039 738 lassen sich ebenfalls Organopolysiloxane mit lateral angeordneten, tertiären aminofunktionellen Gruppen herstellen. Sie sollen bei der Anwendung auf textilen Substraten eine verbesserte Beständigkeit gegen Vergilbung bewirken.

In FR 1 184 198 A werden organofunktionelle Alkylaminoalkylsilane und daraus hergestellte Organopolysiloxane beschrieben, deren lateral angeordnete aminofunktionelle Gruppen in tertiärer Form vorliegen.

Silane und Siloxane mit einer endständigen quaternären Ammoniumgruppe werden in GB 1 006 729 beschrieben, welche zur Behandlung von Glasoberflächen verwendbar sind.

Kationische Organopolysiloxane werden gemäß JP 021157285-A hergestellt. Sie besitzen wegen der nur einseitig terminal angeordneten, quaternären Ammoniumgruppe grenzflächenaktive Eigenschaften und werden als Tenside verwendet.

Kationische Siloxancopolymere, welche quaternäre Ammoniumgruppen in der Hauptkette tragen werden im Journal of Polymer Science: Teil A: Polymer Chemistry, Vol. 40, 3570-3578 (2002) beschrieben. Sie sind hochverzweigt und werden für die Anwendung als lonenaustauscher oder im Sanitärbereich empfohlen.

Es bestand nun die Aufgabe, eine Zubereitung zur Behandlung textiler Substrate aus wässrigen Medien bereitzustellen, bei welcher einerseits die Vorteile der quaternären aminofunktionellen Organopolysiloxane, wie Hydrophilie, Stabilität bei hohen pH-Werten und Vergilbungsresistenz sichergestellt sind, andererseits die guten Weichgriffeffekte der lateral mit nicht alkylierten aminofunktionellen Gruppen modifizierten Organopolysiloxane erhalten bleiben.

In unerwarteter Weise hat sich gezeigt, dass diese Aufgabe erfindungsgemäß durch die Verwendung von teilquatemierten, aminofunktionellen Organopolysiloxanen gelöst werden kann. Dabei werden die quaternären Ammoniumgruppen auf dem Polysiloxanrücken terminal in α,ω-Stellung und die aminofunktionellen Gruppen lateral positioniert. Man erhält einerseits gute-Stabilitäten unter Anwendungsbedingungen in einem breiten pH-Wertbereich (insbesondere zwischen pH 7 und 12), sowie hohe Vergilbungsresistenz. Ferner erhält man mit den erfindungsgemäßen Zubereitungen einen hervorragenden Weichgriff. Überraschenderweise hat sich gezeigt, dass der resultierende Weichgriff sogar deutlich besser ist als der Weichgriff der ausschließlich terminale, quaternäre Ammoniumgruppen tragenden Polysiloxane. Weiterhin zeichnen sich die mit den erfindungsgemäßen Zubereitungen ausgerüsteten Textilien, insbesondere Bade- und Handtücher sowie Unterwäsche und Sportbekleidung durch hohe Saugfähigkeiten aus.

Sofern die erfindungsgemäßen Zubereitungen in Form von Mikroemulsionen Anwendung finden, wird auf cellulosischen Substraten bevorzugt eine innere Weichheit erzielt, weil aufgrund der niedrigen Emulsionspartikelgröße unterhalb 50 nm die teilquaternierten, aminofunktionellen Polysiloxanverbindungen tief in das Garn- und Faserinnere eindringen können. Werden Zubereitungen in Form von Makroemulsionen mit Teilchengrößen oberhalb 50 nm verwendet, wird bevorzugt eine Ablagerung in den äußeren Faser und Fadenschichten durch Filtrationseffekte erreicht. Dies führt zu einem andersartigen Griffcharakter mit größerer Oberflächenglätte und mehr Fülle.

Der erste Gegenstand der Erfindung sind Zubereitungen, gekennzeichnet durch einen Gehalt, bezogen auf die Gesamtzusammensetzung, an
(1) 2 bis 60 Gewichtsprozent eines teilquatemierten aminofunktionellen Organopolysiloxanes der allgemeinen Formel 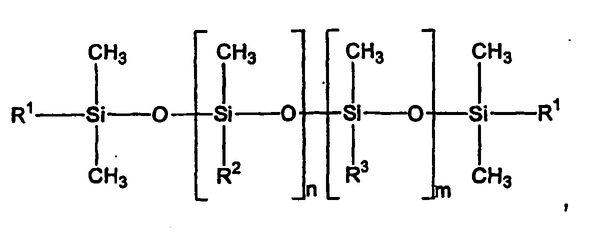
   R¹= 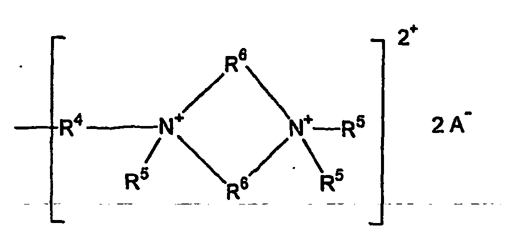 oder 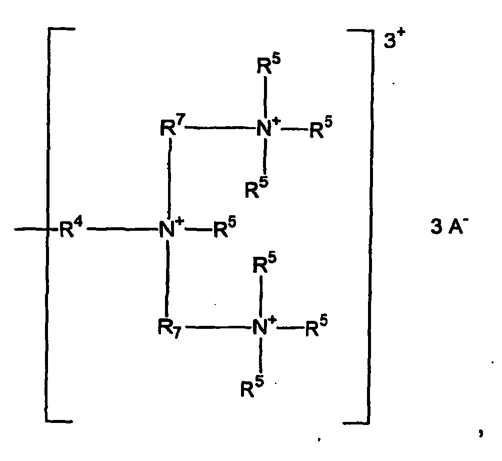
   R²= -(CH₂)ₒ - NH (CH₂)ₚ - NH₂ oder -(CH₂)ₚ-NH₂
   R³= -(CH₂)_{q}-H oder 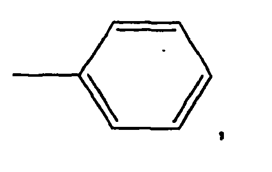
   R⁴= 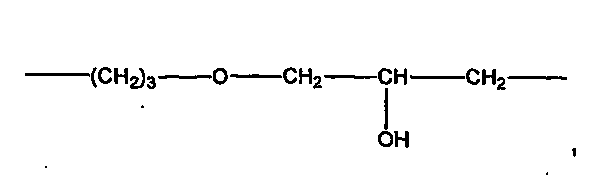 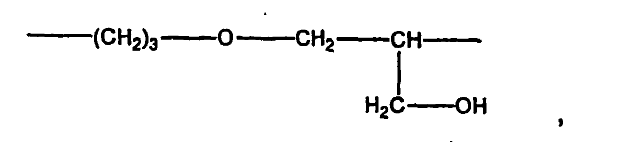 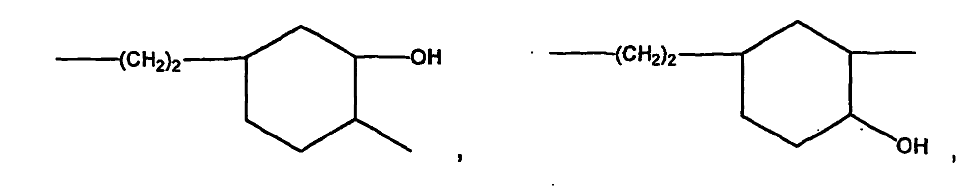 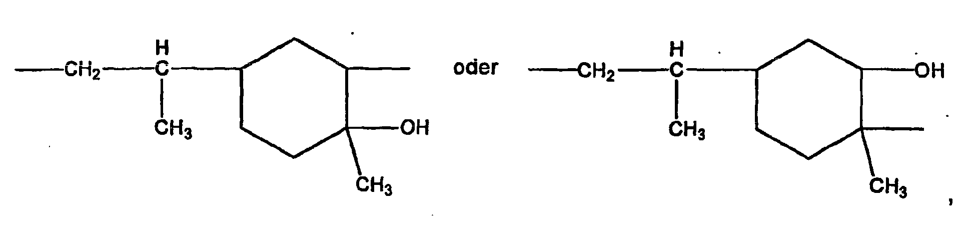
   R⁵= (CH₂)ᵣ-H,
   R⁶= -(CH₂)ₛ -,
   R⁷ = (CH₂)ₜ -,
      - A⁻: anorganische oder organische Anionen,
      - n: eine ganze Zahl von 1 - 20, vorzugsweise 1 -14, besonders bevorzugt 1 - 5,
      - m: eine ganze Zahl von 20 - 2000, vorzugsweise 40 -1000, besonders bevorzugt 40 -120,
      - o und p: jeweils eine ganze Zahl von 1 -10, vorzugsweise 2 - 4,
      - q: eine ganze Zahl von 1 -10, vorzugsweise 1,
      - r: eine ganze Zahl von 1 -18, vorzugsweise 1,
      - s: eine ganze Zahl von 2 - 3, vorzugsweise 2 und
      - t: eine ganze Zahl von 2 - 5, vorzugsweise 2 - 4
   bedeuten, mit der Maßgabe, dass der Gesamtstickstoffgehalt der Komponente (1) 0,05 bis 2,0 Gewichtsprozent, bezogen auf die Gesamtzusammensetzung von Komponente (1) beträgt,
(2) 2 bis 40 Gewichtsprozent eines Emulgators,
(3) 0 bis 15 Gewichtsprozent eines Hydrotropikums und
(4) 20 bis 95 Gewichtsprozent Wasser.

Sämtliche Gewichtsangaben der erfindungsgemäßen Zubereitungen beziehen sich auf die Gesamtzusammensetzung der erfindungsgemäßen Zubereitung. Als bevorzugte Bereiche sind für die Komponente (1) ein Bereich von 10 - 40 Gewichtsprozent, für die Komponente (2) 10 - 20 Gewichtsprozent zu nennen. Sofern die Komponente (3) zugesetzt wird, liegt deren Konzentration bevorzugt im Bereich von 1 -10, insbesondere von 3 - 7 Gewichtsprozent. Der bevorzugte Bereich der Komponente (4) liegt bei 70 - 90, insbesondere jedoch zwischen 60 - 90 Gewichtsprozent.

Der Stickstoffgehalt der Komponente (1) liegt bevorzugt bei 0,1 - 1,5 Gewichtsprozent, insbesondere jedoch bei 0,1 -1,0 Gewichtsprozent bezogen auf die Gesamtzusammensetzung von Komponente (1).

Die Anionen sind von anorganischen oder organischen Säuren abgeleitet. Als Beispiele für anorganische Anionen sind Chlorid, Bromid, Jodid und Sulfat zu nennen; bevorzugt sind Chlorid und Sulfat. Beispiele für organische Anionen sind Tosylat und Acetat; bevorzugt ist Tosylat.

Die Herstellung der teilquatemierten, aminofunktionellen Organopolysiloxane der Komponente (1) erfolgt nach Methoden, welche dem Fachmann bekannt sind. So können durch Equilibrierung von terminal quaternierten, aminofunktionellen Organopolysiloxanen (herstellbar aus terminal epoxifunktionellen Organopolysiloxanen) mit bekannten Silanhydrolisaten, welche laterale Aminogruppen tragen, in Gegenwart bekannter Equilibrierungskatalysatoren die erfindungsgemäßen Komponenten (1) synthetisiert werden.

Verfahren zur analogen Herstellung der dabei als Ausgangsverbindung verwendeten, terminal epoxifunktionellen Organopolysiloxane sind beispielsweise in DE 3705121-A1, solche zur Herstellung der daraus erhaltenen aminofunktionellen Zwischenstufen beispielsweise in WO 02110256-A1 und solche zur Herstellung der wiederum daraus erhaltenen quaternären Zwischenstufen beispielsweise in DE 19652524-A1 beschrieben. Die Herstellung der verwendeten, bekannten Silanhydrolisate ist beispielsweise von W. Noll in "Chemie und Technologie der Silicone", 2. Auflage 1968, S. 168 ff. und von M. A. Brook in "Silicon in Organic, Organometallic, and Polymer Chemistry", 2000, S. 258 ff. beschrieben; Aminoethylaminopropylsilanhydrolisate sind kommerziell erhältlich. Als bekannte Equilibrierungskatalysatoren sind beispielsweise Bortrifluorid, Trifluormethansulfonsäure und Schwefelsäure zu nennen.

Als Emulgatoren (Komponente (2)) können solche auf anionischer, kationischer, nichtionogener oder amphoterer Basis oder Mischungen dieser Verbindungen eingesetzt werden. Vorzugsweise werden Ethoxilierungsprodukte aliphatischer Alkohole mit 6 bis 22 Kohlenstoflatome verwendet, die bis zu 50 Mol Ethylenoxid angelagert enthalten. Die Alkohole können bevorzugt 8 bis 16 Kohlenstoffatome enthalten; sie können gesättigt, linear oder vorzugsweise verzweigt sein und können allein oder in Mischung zur Anwendung gelangen.

Von besonderem Vorteil hinsichtlich niedriger Schaumentwicklung in den Anwendungsflotten sind Alkohole der erwähnten Zusammensetzung, wenn deren Alkylenoxidrest aus Ethylenoxid und 1,2-Propylenoxid in statistischer Verteilung und vorzugsweise in blockartiger Verteilung aufgebaut ist.

Nichtionogene Emulgatoren aus der Gruppe der ethoxilierten, verzweigten aliphatischen Alkohole haben sich aufgrund ihrer günstigen Gesamteigenschaften ganz besonders bewährt. Deshalb werden z.B. Ethoxilate des 2,6,8-Trimethyl-4-nonanols, des Isodecylalkoholes oder des Isotridecylalkoholes mit jeweils 2 bis 50 Molekülen, insbesondere 3 bis 15 Molekülen angelagertem Ethylenoxid für die Herstellung der erfindungsgemäßen Zubereitungen bevorzugt.

Die optional einzusetzende Komponente (3), ein Hydrotropikum, kann üblicherweise aus der Gruppe der polyfunktionellen Alkohole ausgewählt werden. So können Dialkohole mit 2 - 10, bevorzugt 2 - 6, insbesondere jedoch 2 - 4 Kohlenstoffatomen pro Molekül eingesetzt werden. Gut geeignet sind auch deren Mono- und Diether sowie die Mono- und Diester dieser Dialkohole. Als besonders bevorzugt zu verwendende Beispiele für die Komponente (3) sind Butyldiglykol, 1,2-Propylenglykol und Dipropylenglykol zu nennen.

Um die anspruchsgemäßen teilquatemierten, aminofunktionellen Organopolysiloxane in eine aus wässrigem Medium anwendbare Form zu bringen, können hiervon Makro- oder Mikroemulsionen durch scherkraftreiches Verrühren der Komponenten (1) bis (4) bei Temperaturen zwischen 20 und 70°C hergestellt werden.

Weiterer Gegenstand der Erfindung ist die Verwendung der Zubereitungen gemäß Anspruch 1 bei der Veredelung textiler Substrate in wässrigen Bädern und Anwendungsflotten, gegebenenfalls zusammen mit weiteren Präparationsmittein. Gewebe und Gewirke aus nativen Fasern, wie beispielsweise Baumwolle oder Wolle, aber auch aus synthetischen Fasern, wie beispielsweise Viskose, Polyester, Polyamid oder Polyacrylnitril können mit den erfindungsgemäßen aminofunktionellen Polysiloxanen behandelt werden. Bei den gegebenenfalls zusätzlich mitverwendeten Präparationsmitteln kann es sich beispielsweise um Chemikalien zur Knitterfreiausrüstung, um solche zur Verbesserung der Vemähbarkeit des textilen Substrates oder um andere, üblicherweise in textilen Applikationsflotten zur Anwendung gelangende Produkte handeln.

Die Konzentration der erfindungsgemäßen Zubereitungen in den Anwendungsflotten wird so gewährt, dass die behandelten Substrate zwischen 0,3 und 0,6 Gewichtsprozent der anspruchsgemäßen teilquaternierten, aminofunktionellen Organopolysiloxane, bezogen auf das Gewicht des Substrates enthalten.

Eine bevorzugte Anwendung mit den erfindungsgemäßen Zubereitungen erfolgt als Zwangsapplikation durch Tränken des Substrates mit der Anwendungsflotte, anschließendes Abquetschen auf dem Foulard und einer abschließenden Trocknungspassage.

Die Erfindung wird mit den nachfolgenden Beispielen näher erläutert. Bei den Kettenlängenangaben, die in den Formeln dieser Beispiele für die anspruchsgemäßen Indizes n und m erscheinen, handelt es sich jeweils um Durchschnittswerte. Die in den Beispielen eingesetzten Zubereitungen werden durch einfaches Verrühren der Einzelkomponenten bei 70°C hergestellt.

### Beispiel 1 (nicht erfindungsgemäß):

Die Zubereitung besteht aus einer wässrigen Mikroemulsion, enthaltend 20 Gewichtsprozent eines Organopolysiloxanes mit lateral positionierten Aminogruppen der Formel 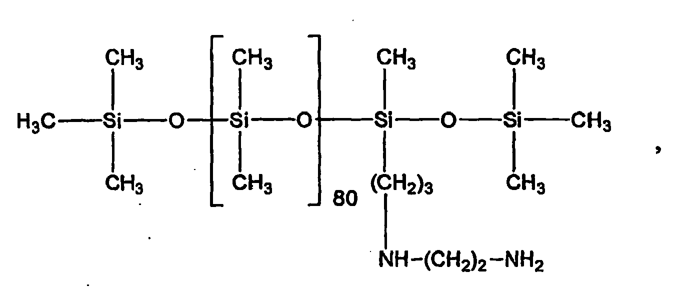 10 Gewichtsprozent eines Isodecylalkohofes mit 7 Ethylenoxidgruppen, 3 Gewichtsprozent Butyldiglykol und 0,4 Gewichtsprozent Essigsäure 60 %. Der Gesamtstickstoffgehalt des Organopolysiloxanes beträgt 0,44 Gewichtsprozent.

### Beispiel 2 (nicht erfindungsgemäß):

Die Zubereitung besteht aus einer wässrigen Mikroemulsion, enthaltend 20 Gewichtsprozent eines Organopolysiloxanes mit terminal positionierten und quaternierten Aminogruppen der Formel 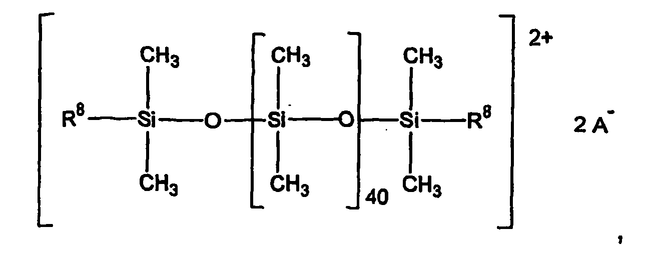 wobei
R⁸= 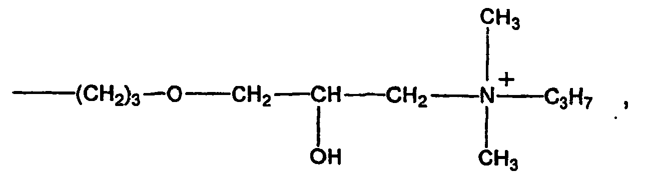 A⁻ = Cl⁻
ist, 5 Gewichtsprozent eines Isotridecylalkoholes mit 6 Ethylenoxidgruppen, 5 Gewichtsprozent eines Isodecylalkoholes mit 7 Ethylenoxidgruppen und 7 Gewichtsprozent Butyldiglykol. Der Gesamtstickstoffgehalt des Organopolysiloxanes beträgt 0,78 Gewichtsprozent.

### Beispiel 3 (erfindungsgemäß):

Die Zubereitung besteht aus einer wässrigen Mikroemulsion, enthaltend 20 Gewichtsprozent eines Organopolysiloxanes mit lateral positionierten Aminogruppen sowie terminal positionierten und Quaternierten Aminogruppen der Formel (I) 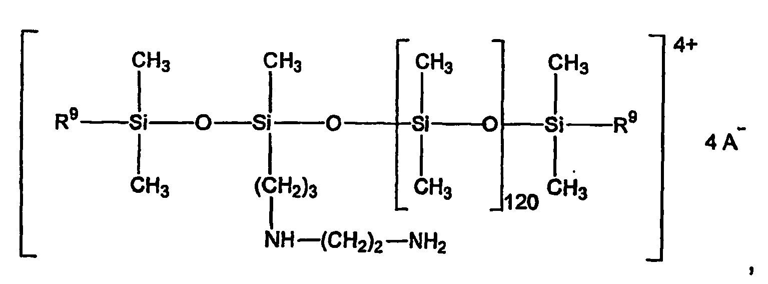 wobei
R⁹= 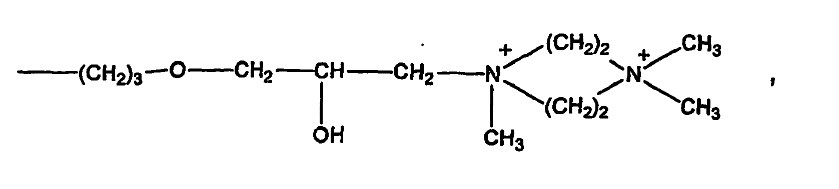 A = 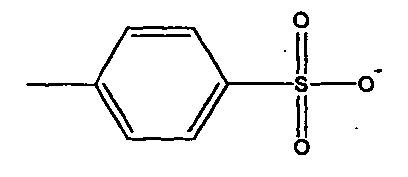 ist, 5 Gewichtsprozent eines Isotridecylalkoholes mit 6 Ethylenoxidgruppen, 5 Gewichtsprozent eines Isodecylalkoholes mit 7 Ethylenoxidgruppen und 7 Gewichtsprozent Butyldiglykol. Der Gesamtstickstoffgehalt des Organopolysiloxanes beträgt 0,80 Gewichtsprozent.

Die Herstellung des Organopolysiloxanes der Formel (I) erfolgt analog WO 02/10256-A1, Beispiel 1, Teil 1a) unter Verwendung eines Polydimethylsitoxanes mit terminalen Epoxigruppen und einer durchschnittlichen Kettenlänge von 120 Einheiten, hergestellt analog DE 3705121-A1, Beispiel 1. Das erhaltene Zwischenprodukt wird analog DE 19652524-A1 in isopropanolischer Lösung mit p-Toluolsulfonsäuremethylester quaterniert und nach destillativer Entfernung des Lösemittels mit 2 Gewichtsprozent eines Aminoethylaminopropylsilanhydrolisates versetzt. Nach Zugabe von 0,15 Gewichtsprozent Trifluormethansulfonsäure wird während 2 Stunden bei 115°C gerührt, wobei aus der ursprünglich inhomogenen, trüben Mischung ein klares, gelbliches Organopolysiloxan der Formel (I) entsteht.

### Beispiel 4 (erfindungsgemäß);

Die Zubereitung besteht aus einer wässrigen Mikroemulsion, enthaltend 20 Gewichtsprozent eines Organopolysiloxanes mit lateral positionierten Aminogruppen sowie terminal positionierten und quaternierten Aminogruppen der Formel (II) 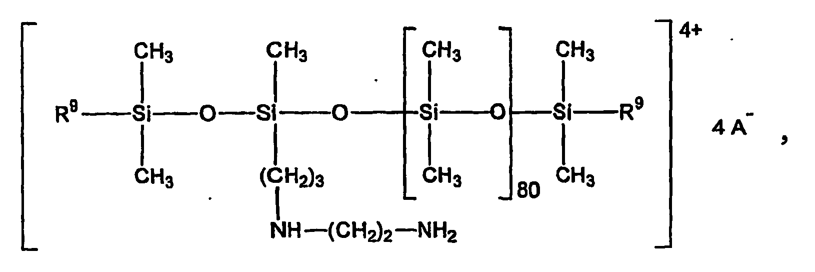 wobei
R⁹= 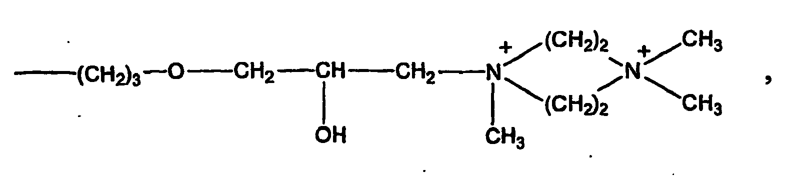 A⁻ = 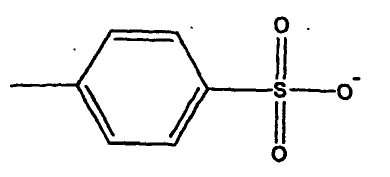 ist, 5 Gewichtsprozent eines Isotridecylalkoholes mit 6 Ethylenoxidgruppen, 5 Gewichtsprozent eines Isodecylalkoholes mit 7 Ethylenoxidgruppen und 7-Gewichtsprozent-Butyldiglykol. Der Gesamtstickstoffgehalt des Organopolysiloxanes beträgt 1,13 Gewichtsprozent.

Die Herstellung des Organopolysiloxanes der Formel (II) erfolgt analog Beispiel 3 unter Verwendung eines Polydimethylsiloxanes mit terminalen Epoxigruppen und einer durchschnittlichen Kettenlänge von 80 Einheiten. Es entsteht ein klares, gelbliches Organopolysiloxan.

### Beispiel 5 (erfindungsgemäß):

Die Zubereitung besteht aus einer wässrigen Mikroemulsion, enthaltend 20 Gewichtsprozent eines Organopolysiloxanes mit lateral positionierten Aminogruppen sowie terminal positionierten und quaternierten Aminogruppen der Formel (III) 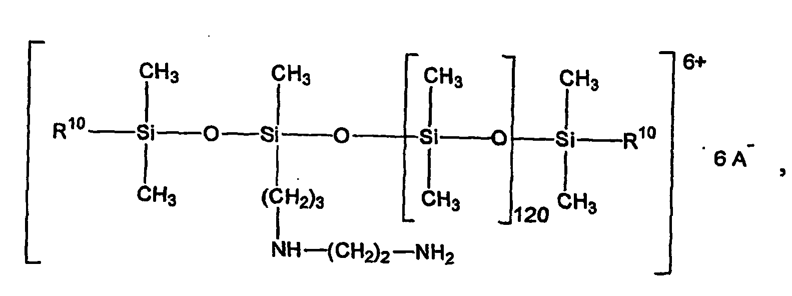 wobei
R¹⁰ = 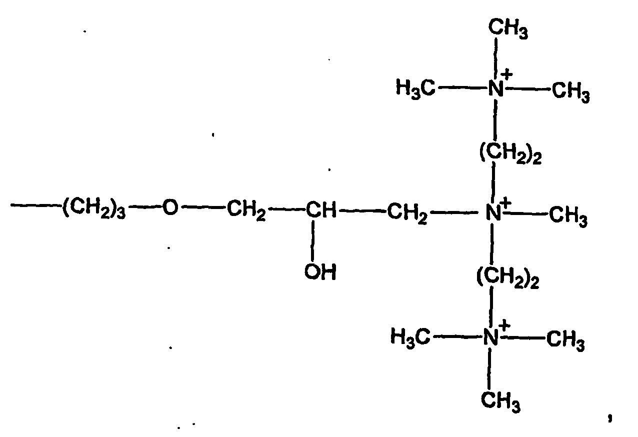 A⁻ = 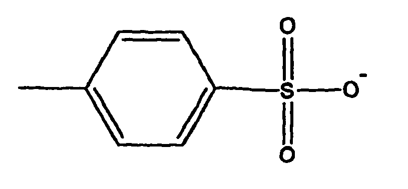 ist, 5 Gewichtsprozent eines Isotridecylalkoholes mit 6 Ethylenoxidgruppen, 5 Gewichtsprozent eines Isodecylalkoholes mit 7 Ethylenoxidgruppen und 7-Gewichtsprozent Butyldiglykol. Der Gesamtstickstoffgehalt des Organopolysiloxanes beträgt 1,03 Gewichtsprozent.

Die Herstellung des Organopolysiloxanes der Formel (III) erfolgt analog WO 02/10501 A1, Beispiel 4, unter Verwendung eines Polydimethylsiloxanes mit terminalen Epoxigruppen und einer durchschnittlichen Kettenlänge von 120 Einheiten, hergestellt analog DE 3705121-A1, Beispiel 1. Das erhaltene Zwischenprodukt wird analog DE 19652524-A1 in isopropanolischer Lösung mit p-Toluolsulfonsäuremethylester quatemiert und nach destillativer Entfernung des Lösemittels mit 2 Gewichtsprozent eines Aminoethylaminopropylsilanhydrolisates versetzt. Nach Zugabe von 0,15 Gewichtsprozent Trifluormethansulfonsäure wird während 2 Stunden bei 115°C gerührt, wobei aus der ursprünglich inhomogenen, trüben Mischung ein klares, gelbliches Organopolysiloxan der Formel (III) entsteht.

### Anwendungsbeispiele

### Griffbeurteilung

Abschnitte einer gebleichten, nicht optisch aufgehellten Baumwoll-Frotteeware wurden mit einer wässrigen Flotte, enthaltend 20 g/l der gemäß den Beispielen hergestellten Mikroemulsionen und 0,5 g/l Essigsäure 60 % auf einem Laborfoulard mit einer Nassaufnahme von 80 % imprägniert und anschließend 2 Minuten bei 120°C getrocknet. Anschließend erfolgte die Beurteilung des Griffcharakters der mit den Mikroemulsionen behandelten Testgewebe. Diese unterliegt individuell unterschiedlichen, subjektiven Kriterien. Um trotzdem zu aussagekräftigen Ergebnissen zu kommen, ist eine Beurteilung durch mindestens 5 Testpersonen erforderlich. Die Auswertung der Ergebnisse erfolgte nach statistischen Methoden, wobei die Notenstufe 1 den weichsten, angenehmsten Griff, die Notenstufe 10 den härtesten, am wenigsten oberflächenglatten und unangenehmsten Griff innerhalb der Testreihe darstellt.

| | Griffbewertungsnote innerhalb der Testreihe |
|---|---|
| Mikroemulsion nach Beispiel 1 | 1,5 |
| Mikroemulsion nach Beispiel 2 | 7,2 |
| Mikroemulsion nach Beispiel 3 | 2,1 |
| Mikroemulsion nach Beispiel 4 | 2,6 |
| Mikroemulsion nach Beispiel 5 | 3,4 |
| Unbehandelt | 10 |

### Hydrophilie

Abschnitte einer gebleichten, nicht optisch aufgehellten Baumwoll-Frotteeware wurden mit einer wässrigen Flotte, enthaltend 20 g/l der gemäß den Beispielen hergestellten Mikroemulsionen und 0,5 g/l Essigsäure 60 % auf einem Laborfoulard mit einer Nassaufnahme von 80 % imprägniert und anschließend 2 Minuten bei 120°C getrocknet. Anschließend erfolgte die Beurteilung der Hydrophilie gemäß des TEGEWA-Tropftestes (Melliand Textilberichte 68 (1987), 581 - 583).

| | Einsinkzeit (sec) |
|---|---|
| Mikroemulsion nach Beispiel 1 | Über 180 |
| Mikroemulsion nach Beispiel 2 | 10 |
| Mikroemulsion nach Beispiel 3 | Unter 1 |
| Mikroemulsion nach Beispiel 4 | 1 |
| Mikroemulsion nach Beispiel 5 | 3 |
| Unbehandelt | Unter 1 |

### Vergilbung

Abschnitte einer gebleichten, nicht optisch aufgehellten Baumwoll-Modal-Maschenware wurden mit einer wässrigen Flotte, enthaltend 20 g/l der gemäß den Beispielen hergestellten Mikroemulsionen und 0,5 g/l Essigsäure 60 % auf einem Laborfoulard mit einer Nassaufnahme von 80 % imprägniert, 2 Minuten bei 120°C getrocknet und anschließend 2 Minuten bei 170°C thermofixiert. Anschließend wurde der Weißgrad der Muster nach Ganz auf dem Weißgradmeßgerät "texflash 2000" der Firma "datacolor international" (Schweiz) gemessen.

| | Weißgrad nach Ganz |
|---|---|
| Mikroemulsion nach Beispiel 1 | 141,5 |
| Mikroemulsion nach Beispiel 2 | 151,0 |
| Mikroemulsion nach Beispiel 3 | 150,1 |
| Mikroemulsion nach Beispiel 4 | 147,8 |
| Mikroemulsion, nach Beispiel 5 | 150,5 |
| unbehandelt | 151,8 |

### Alkalistabilität

Die Stabilität der Organopolysiloxanemulsionen gegen Alkalien in Ausrüstüngsflotten wurde gemäß dem nachfolgend beschriebenen Test durchgeführt:
500 ml einer Lösung der zu untersuchenden Organopolysiloxanemulsion mit einer Konzentration von 40 g/l wurden in einem 1000 ml Becherglas vorgelegt und mit Natriumhydroxidlösung (w(NaOH) = 10 %) auf einen pH-Wert von 12 eingestellt. Anschließend wurde die Flotte zwanzig Minuten mit einem Flügelrührer bei zweitausend Umdrehungen pro Minute gerührt. Nach dem Ablauf dieser Zeit wurde der Rührer abgestellt, der entstandene Schaum zerfallen gelassen und die Flüssigkeitsoberfläche nach 1 Stunde hinsichtlich Abscheidungen beurteift.

| | Beurteilung nach 1 Stunde |
|---|---|
| Mikroemulsion nach Beispiel 1 | Starke Silikonabscheidungen |
| Mikroemulsion nach Beispiel 2 | Dünner Ölfilm auf der Oberfläche |
| Mikroemulsion nach Beispiel 3 | keine Abscheidungen |
| Mikroemulsion nach Beispiel 4 | keine Abscheidungen |
| Mikroemulsion nach Beispiel 5 | keine Abscheidungen |

## Patentansprüche

1. Zubereitungen, **gekennzeichnet durch** einen Gehalt, bezogen auf die Gesamtzusammensetzung, an
(1) 2 bis 60 Gewichtsprozent eines teilquaternierten aminofunktionellen Organopolysiloxanes der allgemeinen Formel 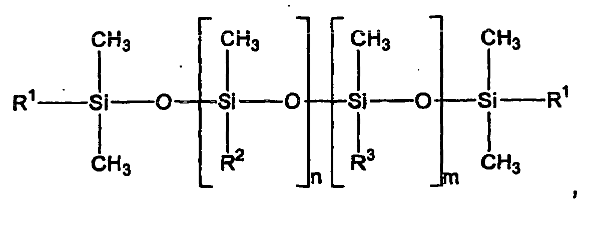 wobei
R¹= 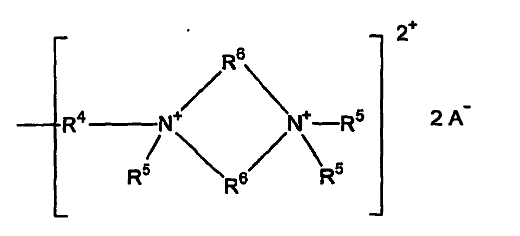 oder 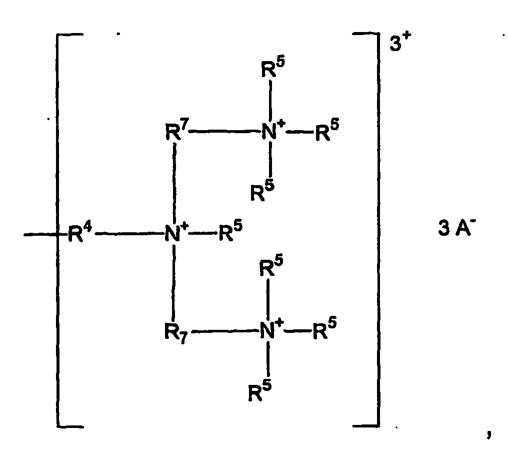
R²= (CH₂)ₒ-NH-(CH₂)ₚ-NH₂ oder -(CH₂)ₚ-NH₂
R³= -(CH₂)_{q}-H oder 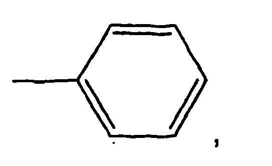
R⁴= 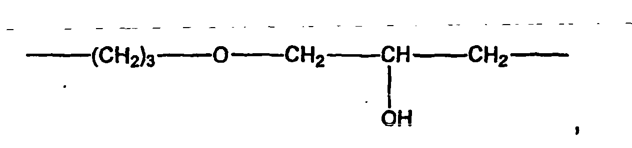 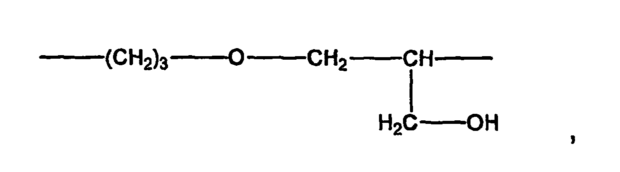 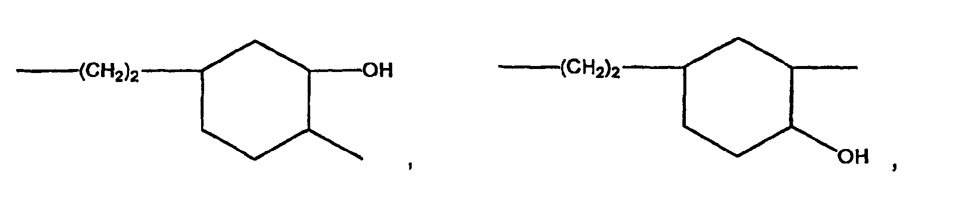 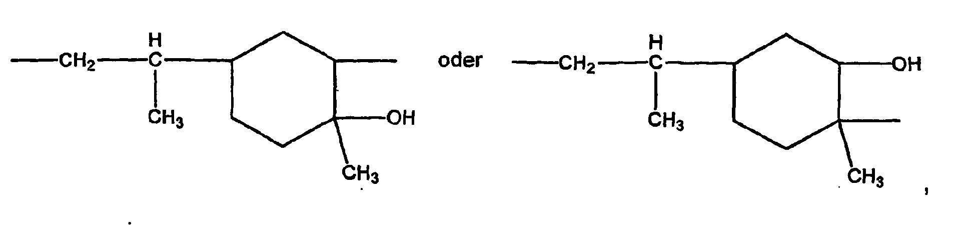
R⁵= -(CH₂)ᵣ-H,
R⁶= -(CH₂)ₛ-,
R⁷= -(CH₂)ₜ-,
A⁻ anorganische oder organische Anionen,
n eine ganze Zahl von 1 - 20,
m eine ganze Zahl von 20 - 2000,
o, p und q jeweils eine ganze Zahl von 1 -10,
r eine ganze Zahl von 1 -18,
s eine ganze Zahl von 2 - 3 und
t eine ganze Zahl von 2 - 5
bedeuten, mit der Maßgabe, dass der Gesamtstickstoffgehalt der Komponente (1) 0,05 bis 2,0 Gewichtsprozent, bezogen auf die Gesamtzusammensetzung von Komponente (1) beträgt,
(2) 2 bis 40 Gewichtsprozent eines Emulgators,
(3) 0 bis 15 Gewichtsprozent eines Hydrotropikums und
(4) 20 bis 95-Gewichtsprozent Wasser.

2. Verwendung der Zubereitungen gemäß Anspruch 1 bei der Veredelung textiler Substrate in wässrigen Bädern und Anwendungsflotten, gegebenenfalls zusammen mit weiteren Präparationsmitteln.

3. Textile Substrate, welche gemäß Anspruch 2 veredelt sind.

## Claims

1. Preparations **characterised by** a content, based on their overall composition, of
(1) 2 to 60 percent by weight of a partially quaternised amino-functional organopolysiloxane of the general formula: 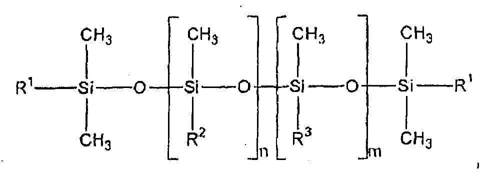 in which
R¹= 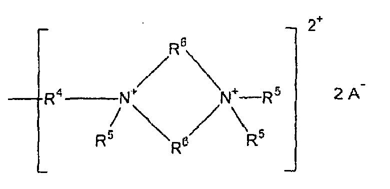 or 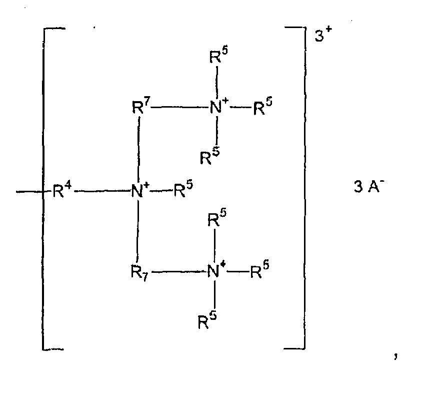
R²= (CH₂)ₒ-NH-(CH₂)ₚ-NN₂ oder -(CH₂)ₚ-NH₂
R³= -(CH₂)_{q}-H oder 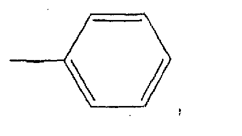
R⁴= 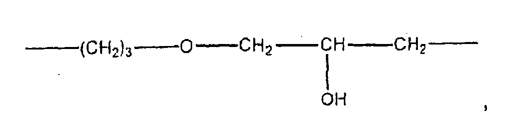 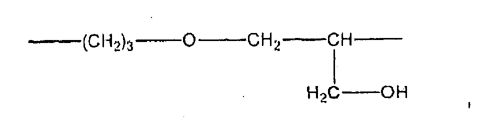 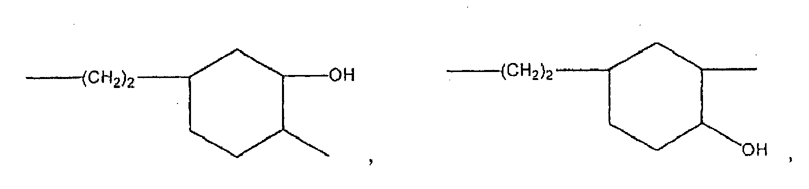 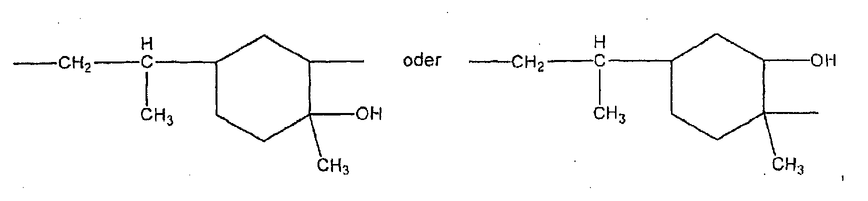
R⁵= -(CH₂)ᵣ-H,
R⁶= -(CH₂)ₛ,
R⁷= -(CH₂)ₜ-,
A⁻ represents inorganic or organic anions,
n is an integer from 1 to 20,
m is an integer from 20 to 2000,
o, p and q are each an integer from 1 to 10,
r is an integer from 1 to 18,
s is an integer from 2 to 3, and
t is an integer from 2 to 5
providing that the total nitrogen content of component (1) is 0.05 to 2.0 percent by weight, based on the overall composition of component (1),
(2) 2 to 40 percent by weight of an emulsifying agent
(3) 0 to 1 percent by weight of a hydrotrope and
(4) 20 to 95 percent by weight of water.

2. Use of the preparation according to claim 1 in the finishing of textile substrates in aqueous baths and application liquors, optionally in combination with other preparation media.

3. Textile substrates which have been finished in accordance with claim 2.

## Revendications

1. Préparations **caractérisées par** une teneur, rapportée à la composition totale, de
(1) 2 à 60 % en masse d'un organopolysiloxane amino-fonctionnel partiellement quaternisé de formule générale 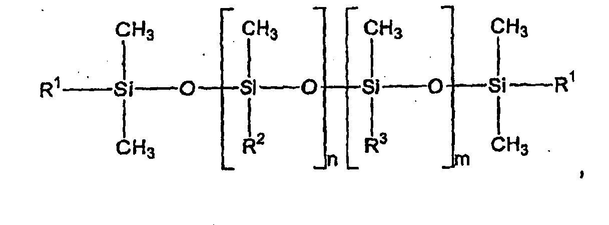 où
R¹= 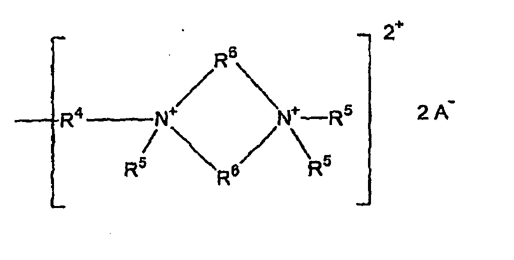 ou 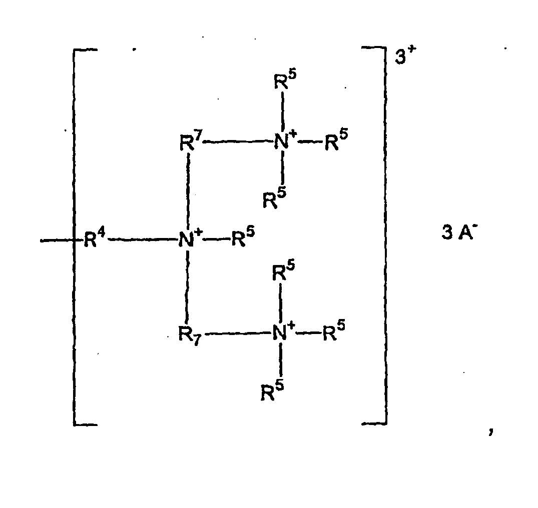
R² = -(CH₂)ₒ-NH-(CH₂)ₚ-NH₂ ou -(CH₂)ₚ-NH₂,
R³= -(CH₂)_{q}-H ou 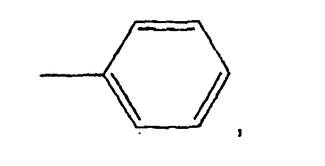
R⁴= 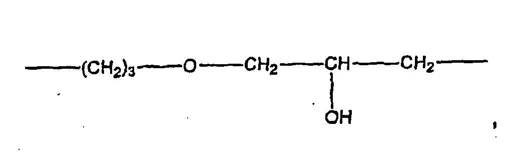 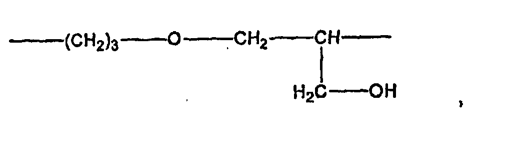 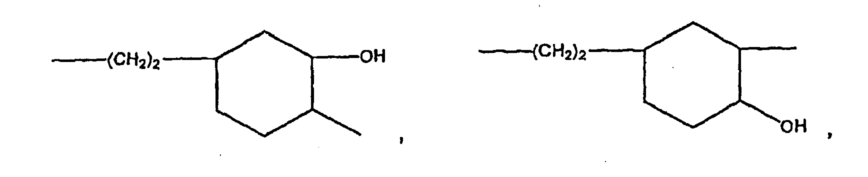 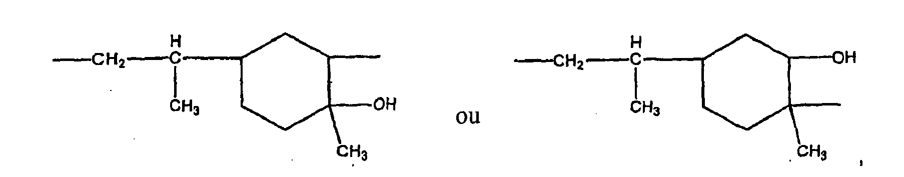
R⁵= (CH₂)ᵣ-H,
R⁶= **-**(CH₂)ₛ-_{,}
R⁷= (CH₂)ₜ-,
A⁻ représente des anions inorganiques ou organiques,
n représente un nombre entier de 1-20,
m représente un nombre entier de 20-2000,
o, p et q représentent chacun un nombre entier de 1-10,
r représente un nombre entier de 1-18,
s représente un nombre entier de 2-3 et
t représente un nombre entier de 2-5,
avec la condition que la teneur en azote totale du composant (1) soit 0,05 à 2,0 % en masse, rapportée à la composition totale du composant (1),
(2) 2 à 40 % en masse d'un émulsifiant,
(3) 0 à 15 % en masse d'un hydrotropique et
(4) 20 à 95 % en masse d'eau.

2. Utilisation des préparations selon la revendication 1 dans l'amélioration de substrats textiles dans des bains aqueux et des bains d'utilisation, éventuellement conjointement avec d'autres agents de préparation.

3. Substrats textiles qui sont améliorés selon la revendication 2.
